# EUROPÄISCHE PATENTSCHRIFT

(11) **EP 2 933 232 B1**
(45) Veröffentlichungstag und Bekanntmachung des Hinweises auf die Patenterteilung: **21.10.2026**
(21) Anmeldenummer: 15160860.1
(22) Anmeldetag: 25.03.2015
(51) Int. Cl.: C02F 1/28, B01D 29/07, C02F 1/32, C02F 1/44, C02F 1/50, C02F 1/461, C02F 1/02, C02F 103/02

(54) **VERFAHREN ZUR FILTRATION VON TRINK- ODER BETRIEBSWASSER IN EINER WASSERVERSORGUNGSEINRICHTUNG**
METHOD FOR THE FILTRATION OF DRINKING OR PROCESS WATER IN A WATER SUPPLY INSTALLATION
PROCÉDÉ DE FILTRATION D'EAU POTABLE OU DE SERVICE DANS UN DISPOSITIF D'ALIMENTATION EN EAU

(30) Priorität: 17.04.2014 DE 102014105533
(43) Veröffentlichungstag der Anmeldung: 21.10.2015
(73) Patentinhaber: Grünbeck AG, 89420 Höchstädt a.d. Donau (DE)
(72) Erfinder: Söcknick, Ralf, 70806 Kornwestheim (DE); Willbold, Hans, 89264 Weissenhorn (DE); Meinardus, Martin, 89231 Neu-Ulm (DE); Gerstner, Florian, 86199 Augsburg (DE)
(74) Vertreter: Charrier Rapp & Liebau

(56) Entgegenhaltungen:
- EP-A2- 0 862 022
- DE-A1- 102006 062 352
- DE-A1- 19 932 795
- DE-A1- 3 836 523
- "Pall Kleenpak(TM) Wasserfilter - Filtrationslösungen für den Water Safety Plan und zur Ergänzung des Wassermanagements", 1 January 2011 (2011-01-01), XP055191300, Retrieved from the Internet <URL:http://shop.pall.de/media/products/0634041001362644045.pdf> [retrieved on 20150522]

## Beschreibung

Die Erfindung betrifft ein Verfahren zur Filtration von Trink- oder Betriebswasser in einer Wasserversorgungseinrichtung nach dem Oberbegriff des Anspruchs 1.

Wasserversorgungseinrichtungen mit einem Wasserzulauf, einer mit dem Wasserzulauf in Verbindung stehenden Wasserleitung und wenigstens einem in der Wasserleitung angeordneten Wasserfilter sind beispielsweise für die Versorgung von Gebäuden mit Trinkwasser bekannt. Die Wasserleitung umfasst dabei Rohrleitungen, die im Gebäude verlegt und zur Entnahme des in den Rohrleitungen unter Druck geführten Wassers mit Entnahmestellen gekoppelt sind, wie z.B. Wasserhähne oder andere Zapfarmaturen oder Wasseranschlüsse von Haushaltsgeräten wie Spül- und Waschmaschinen und dergleichen. Bei dem Wasserzulauf kann es sich dabei bspw. um einen Trinkwasser-Hausanschluss mit Wasserhauseinführung und Erstabsperrung und einem Wasserzähler handeln, der mit dem öffentlichen Trinkwasserversorgungssystem in Verbindung steht. In der Regel ist im Wasserzulauf ein Eingangsfilter angeordnet. Dieser Eingangsfilter dient dazu, Schmutzpartikel zurück zu halten, die in dem Wasser aus der öffentlichen Wasserversorgung enthalten sind.

Aus dem Stand der Technik ist bekannt, Wasserfilter mit wechselbarem Filterelement als Eingangsfilter zu verwenden, deren Filterelemente zur Regenerierung des Eingangsfilters in regelmäßigen Abständen, typischerweise alle 6 Monate, ausgewechselt werden müssen. Als Alternative zu solchen Wechselfiltern können auch rückspülbare Filter als Eingangsfilter zum Einsatz kommen. Die Reinigung des Filterelements wird dabei mittels einer i.d.R. automatisierten Rückspülung in umgekehrter Fliessrichtung durchgeführt, wobei auch hier regelmäßige Rückspülintervalle von nicht länger als zwei Monaten gefordert werden.

Wenn Trinkwasser über längere Zeit in den Wasserleitungen einer Wasserversorgungseinrichtung stagniert, können sich Mikroorganismen in höherer Konzentration entwickeln, als dies nach der Trinkwasserverordnung zulässig ist. Dies kann insbesondere in Warmwasserleitungen vermehrt auftreten, weil dort häufig Wasser mit Temperaturen im Bereich von 30°C bis 50°C zirkuliert und dieser Temperaturbereich für die Vermehrung von pathogenen Mikroorganismen, wie z.B. Pseudomonaden und Legionellen, optimale Bedingungen bietet.

Für den gewerblichen Betrieb von Warmwasserleitungen gelten in Deutschland normierte Vorschriften, die beispielsweise in der Trinkwasserverordnung geregelt sind. Danach gilt Trinkwasser, in dem pathogene Mikroorganismen, enthalten sind, bei einem Gehalt von 100 KbE (Koloniebildende Einheiten) pro 100 ml als kontaminiert. Betreiber von Trinkwasser-Installationen mit einer Großanlage zur Trinkwassererwärmung werden nach der Trinkwasserverordnung verpflichtet, die Kontamination des Wassers mit pathogenen Mikroorganismen, insbesondere Legionellen, routinemäßig alle drei Jahre überprüfen zu lassen. Wird der Grenzwert von 100 KbE pro 100 ml Wasser bei einer Untersuchung überschritten, muss eine Meldung an das Gesundheitsamt erfolgen. Zur Verringerung des Legionellenwachstums in Wasserleitungen einer Zirkulationseinrichtung mit einer Trinkwassererwärmung soll am Austritt von Warmwassererzeugungsanlagen ständig eine Temperatur von wenigstens 60°C bereit gehalten werden und die Warmwassertemperatur darf in Anlagen mit Zirkulationsleitungen nicht um mehr als 5°C gegenüber dieser Austrittstemperatur an der Warmwassererzeugungsanlage absinken. Die Rücklauftemperatur der Zirkulationsleitung in die Warmwassererzeugungsanlage muss daher mindestens 55°C betragen.

Durch die Erhitzung von Trinkwasser auf Temperaturen über 55°C fällt in den Rohrleitungen der Wasserleitung vermehrt gelöster Kalk aus, der sich beispielsweise an Rohrwandungen von Wärmetauschern ablagern und somit zu einer Verringerung der Effizienz des Wärmetauschers führen kann. Da für die meisten Verwendungen von Warmwasser im Haushalt, beispielsweise zum Baden und Duschen oder zum manuellen Reinigen von Geschirr, in der Regel Wassertemperaturen von bis zu 45°C ausreichen, stellt die andauernde Aufrechterhaltung der Wassertemperatur in den Zirkulationsleitungen von mehr als 55°C überdies eine Verschwendung von Energie dar, die für das Erhitzen des Wassers auf die geforderte Vorlauftemperatur von mindestens 60°C aufgewendet werden muss. Darüber hinaus stellt die geforderte Vorlauftemperatur und die Mindesttemperatur des Wassers in den Zirkulationsleitungen von 55°C eine technische Herausforderung bei der Nutzung von Geothermie, Solarthermie und Wärmepumpen zur Brauchwassererwärmung dar. Eine geringere Temperatur des Wassers in den Zirkulationsleitungen könnte zu einer höheren Effizienz der Nutzung von thermischer Energie aus regenerativen Energiequellen führen. Insbesondere könnte über ein ganzes Jahr gesehen der effektive Nutzungszeitraum von Solarthermie verlängert werden, wenn die Vorlauftemperatur und die Mindesttemperatur des Wassers in den Zirkulationsleitungen für die Warmwasserversorgung von Gebäuden erniedrigt werden könnte. Darüber hinaus würde auch der Unterschied zwischen der Vorlauftemperatur des Warmwassers für eine Fußbodenheizung und des erwärmten Trinkwassers deutlich geringer ausfallen.

Weitere bekannte Maßnahmen zur Verminderung des Legionellenwachstums in Wasserleitungen sind die Ultrafiltration mit Membranfiltern mit einer Porenweite von 0,01 bis 0,05 µm, sowie die UV-Desinfektion von erwärmtem Trinkwasser, die eine Abtötung von im Wasser enthaltenen Mikroorganismen unter Einwirkung von UV-Strahlung bewirkt. Diese Maßnahmen können auch in Kombination miteinander zum Einsatz kommen. So ist bspw. aus der DE 202009018489 U1 eine Anlage zur Aufbereitung von Trinkwasser bekannt, mit der eine mikrobiologische Kontamination des Trinkwassers verhindert werden kann, welche eine Partikelfilterstufe und eine erste UV-Desinfektionsstufe sowie eine Trinkwasserentnahmestelle im Kaltwasserbereich sowie zwischen der ersten UV-Desinfektionsstufe und der Trinkwasserentnahmestelle in paralleler Anordnung ein Warmwasserbereitungsmittel zum Erwärmen des Trinkwassers und eine Zirkulationsleitung aufweist, in der das erwärmte Trinkwasser zirkuliert, wobei in der Zirkulationsleitung eine zweite UV-Desinfektionsstufe zur weitergehenden Entfernung und Verhinderung der mikrobiologischen Kontamination des erwärmten Trinkwassers vorgesehen ist. Durch die Kombination von Filtration in der Partikelfilterstufe und selektiver UV-Oxidation in der ersten UV-Desinfektionsstufe wird das in die Anlage eintretende Kaltwasser zunächst von Mikroorganismen, insbesondere Legionellen und Protozoen, befreit. Durch die zweite UV-Desinfektionsstufe wird die Anzahl der noch verbliebenen oder aus dem Warmwasserbereitungsmittel oder Leitungssystem hinzugekommenen freischwimmenden Mikroorganismen im Warmwasser weiter reduziert. Schließlich wird durch die fortgesetzte, jedenfalls teilweise Rückführung des erwärmten und in der zweiten UV-Desinfektionsstufe gereinigten Wassers in das Warmwasserbereitungsmittel und anschließend wieder in die zweite UV-Desinfektionsstufe dauerhaft eine niedrige Belastung des Warmwassers durch Mikroorganismen sichergestellt.

In der DE 38 36 523 A1 wird ein Verfahren zur Filtration von Brauchwasser in einer Zirkulationseinrichtung beschrieben, bei der das Brauchwasser vor seiner Abgabe an eine

Zapfstelle in definierten Abschnitten einer physikalischen keimtötenden Behandlung unterzogen wird. Die keimtötende Behandlung findet dabei vorzugsweise in einem örtlichen Abschnitt statt, in dem zuvor Kleinstlebewesen beispielsweise durch mechanische Filterung angesammelt wurden. Dabei kann ein Ultrafilter zum Einsatz kommen, der zwecks Vernichtung der darin enthaltenen Kleinstlebewesen periodisch in vorgegebenen Zeitabständen ausgetauscht oder durchspült werden kann, oder es können die sich darin sammelnden Kleinstlebewesen physikalisch, thermisch, chemisch, oder durch Bestrahlung vernichtet werden.

In der DE 10 2006 062 352 A1 wird ein Wasserabgabegerät beschrieben, welches eine Wasseraufheizeinrichtung und ein Förderaggregat umfasst, mit dem das aufgeheizte Wasser durch die Hauptleitung gefördert werden kann. Dabei kann eine Filtereinrichtung mit Ultrafiltrationsmembran zum Einsatz kommen, die in ihren wasserführenden Komponenten aus Materialien gefertigt ist, welche bei zur Pasteurisierung erforderlichen Temperaturen thermisch stabil sind.

Ein weiteres Verfahren zum Desinfizieren von Wasserbehandlungsanlagen ist aus DE 199 32 795 A1 bekannt.

Die aus dem Stand der Technik bekannte Ultrafiltration von Trinkwasser, das in Zirkulationseinrichtungen mittels einer Zirkulationspumpe umgewälzt wird, weist allerdings den Nachteil auf, dass der Filter, der regelmäßig eine geringe Porengröße im Bereich von 0,01 bis 0,05 µm aufweist, einen sehr hohen Strömungswiderstand in der Zirkulationseinrichtung erzeugt, der von der Zirkulationspumpe zu überwinden ist. Dies verursacht zusätzlichen Energiebedarf und erfordert den Einsatz von Zirkulationspumpen mit genügend hoher Leistung. Auch die UV-Desinfektion erweist sich als apparativ aufwendig und teuer, da sie den Einsatz einer UV-Strahlungsquelle erfordert, die ebenfalls einen hohen Energieverbrauch hat.

Hiervon ausgehend liegt der Erfindung die Aufgabe zugrunde, ein Verfahren zur Filtration von Trink- oder Betriebswasser in einer Wasserversorgungseinrichtung aufzuzeigen, mit dem möglichst zuverlässig und kostengünstig eine unkontrollierte und gesundheitsschädliche Vermehrung von pathogenen Mikroorganismen in der Wasserleitung verhindert werden kann.

Diese Aufgaben werden mit einem Verfahren zur Filtration von Trink- oder Betriebswasser in einer Wasserversorgungseinrichtung mit den Merkmalen des Anspruchs 1 gelöst. Bevorzugte Ausführungsformen des erfindungsgemäßen Verfahrens sind in den abhängigen Ansprüchen aufgezeigt.

Mit dem erfindungsgemäßen Verfahren wird Trink- oder Betriebswasser filtriert, das in einer Wasserversorgungseinrichtung mit einem Wasserzulauf, einer mit dem Wasserzulauf in Verbindung stehenden Wasserleitung und wenigstens einem in der Wasserleitung angeordneten Wasserfilter geführt wird, um in dem Wasser enthaltene pathogene Mikroorganismen aus dem Wasser zu entfernen. Dazu wird das zu filtrierende Wasser durch den oder die Wasserfilter geleitet. Der wenigstens eine Wasserfilter ist dabei ein Wickelfilter, der aus einem zylindrisch aufgewickelten flächigen Filtermaterial gebildet ist und eine Mehrzahl von zumindest im Wesentlichen parallel zueinander und in einer Längsrichtung des Filters verlaufende Kanäle mit einem Kanaleingang und einem Kanalausgang aufweist, wobei die Kanäle zumindest teilweise von einem elektroaktiven Material begrenzt werden. Im Betrieb des Filters wird das zu filtrierende Wasser durch die Kanäle geleitet, so dass das Wasser die Kanäle jeweils vom Kanaleingang zum Kanalausgang durchströmt, ohne das elektroaktive Material zu durchströmen. Dabei werden im Wasser enthaltene Mikroorganismen, insbesondere Viren und Bakterien, wie z.B. Salmonellen und Legionellen, und ggf. deren Nährstoffe durch Elektroadsorption am elektroaktiven Filtermaterial angelagert und so aus dem Wasser entfernt. Das Wasser strömt dabei durch die Kanäle des Filters, ohne das die Kanäle begrenzende elektroaktive Filtermaterial zu durchströmen. Dadurch wird ein äußerst geringer Strömungswiderstand erzeugt, weil das zu filtrierende Wasser weitgehend ungehindert in Längsrichtung durch die Kanäle strömen kann und nicht durch ein ggf. bereits mit abgeschiedenen Partikeln (insbesondere abgetötete Mikroorganismen) verstopftes Filtermaterial strömen muss. Die in dem jeweiligen Filter angesammelten Mikroorganismen werden gemäß der Erfindung regelmäßig in vorgegebenen Desinfektionsintervallen abgetötet und der mit abgetöteten Mikroorganismen beladene Filter wird in vorgegebenen Regenerationsintervallen durch Austausch des Filters gegen einen Ersatzfilter oder auch durch Austausch eines Filtermaterials des Filters regeneriert.

Die in dem oder jedem Filter gesammelten Mikroorganismen werden periodisch in den vorgegebenen Desinfektionsintervallen abgetötet und nach dem Abtöten der Mikroorganismen der jeweilige Filter durch Durchleiten einer Spülflüssigkeit gespült, um wenigstens einen Teil der in dem Filter angesammelten und abgetöteten Mikroorganismen aus dem Filter auszutragen. Dadurch kann die Standzeit des jeweiligen Filters bis zur nächsten Regeneration verlängert werden, wodurch die Regenerationsintervalle erhöht werden können.

Die Desinfektionsintervalle und die Wiederholungsrate der Desinfektions-Zyklen wird dabei zweckmäßig so ausgewählt, dass über einen Zeitraum mehrerer solcher Desinfektions-Zyklen mehr Mikroorganismen abgetötet werden als im selben Zeitraum in der Wasserversorgungseinrichtung entstehen. Die Desinfektionsintervalle sind dabei kürzer als die Regenerationsintervalle und liegen zwischen 8 und 48 Stunden. Die Regenerationsintervalle werden insbesondere um einen Faktor zwischen 10 und 500 länger als die Desinfektionsintervalle ausgewählt.

Die Desinfektionsintervalle liegen bevorzugt zwischen 16 und 36 Stunden und die Regenerationsintervalle bevorzugt zwischen 8 und 18 Monaten und insbesondere zwischen 10 und 14 Monaten.

Hierfür ist zweckmäßig eine Messeinrichtung in der Wasserversorgungseinrichtung vorhanden, mit der die Belastung des Wassers mit Mikroorganismen erfasst werden kann. Auf diese Weise kann festgestellt werden, ob eine Desinfektion erforderlich ist und die Desinfektionsintervalle können an die erfassten Belastungskonzentrationen, die mit der Messeinrichtung ermittelt werden, angepasst werden. Somit kann zumindest ein Anwachsen der Konzentration von Mikroorganismen in dem in der Wasserleitung geführten Wasser verhindert werden. Dies ermöglicht die zuverlässige Einhaltung der durch die Trinkwasserverordnung vorgegebenen Grenzwerte für die Belastung von Trinkwasser mit pathogenen Mikroorganismen, insbesondere mit Legionellen.

In den Regenerationsintervallen wird der oder die Filter bevorzugt entweder durch Austausch des Filters gegen einen Ersatzfilter oder durch Austausch eines Filtermaterials des Filters regeneriert. Für eine einfache und schnelle Regeneration der Filter in den vorgegebenen Regenerationsintervallen ist es dabei zweckmäßig, wenn der Filter ein austauschbares Filtermaterial enthält, welches Mikroorganismen bindet und zur Regenerierung des Filters gegen unbeladenes Filtermaterial ausgetauscht werden kann.

In zweckmäßigen Ausführungsbeispielen enthält die Wasserversorgungseinrichtung einen im Wasserzulauf angeordneten Eingangsfilter, der bevorzugt als Doppelfilter mit zwei Filterelementen ausgebildet ist, welche wechselseitig betrieben und regeneriert werden. Die Wasserleitung kann eine Zirkulationsleitung umfassen, insbesondere eine Zirkulationsleitung für Warmwasser, welche eine Heizeinrichtung und einen Speicherbehälter aufweist und mit einem Zirkulationsfilter gekoppelt ist. Der Zirkulationsfilter kann dabei entweder in der Zirkulationsleitung oder auch in einem mit der Zirkulationsleitung verbundenen Bypass angeordnet sein. Die Anordnung in einem Bypass ermöglicht es dabei, das in der Zirkulationsleitung zirkulierende Wasser während der Filtration durch den Bypass und den darin angeordneten Filter zu leiten und während der Desinfektionszyklen das Wasser unter Umgehung des Filters in der Zirkulationsleitung zirkulieren zu lassen.

Die Wasserinstallation weist regelmäßig mehrere Entnahmestellen, wie z.B. Zapfstellen wie Wasserhähne oder Duschköpfe auf. In zweckmäßigen Ausführungsbeispielen des erfindungsgemäßen Verfahrens sind diese Entnahmestellen mit Wasserfiltern ausgestattet, die als Entnahmestellenfilter fungieren. Dadurch kann sichergestellt werden, dass im Wasser enthaltene Mikroorganismen, die sich in dem in der Wasserleitung stehenden oder zirkulierenden Wasser gebildet haben, direkt an der Entnahmestelle aus dem Wasser entfernt werden, bevor dieses die Entnahmestelle verlässt.

Die in dem jeweiligen Filter (also bspw. dem Eingangsfilter, dem Zirkulationsfilter oder den Entnahmestellenfiltern) gesammelten Mikroorganismen werden in den Desinfektionsintervallen bspw. thermisch durch Erhitzen des Filters, chemisch durch Einleiten eines Desinfektionsmittels in den Filter, physikalisch durch Bestrahlung mit UV-Licht, elektrochemisch durch elektrolytisches Erzeugen eines Desinfektionsmittels in dem Filter oder einer Kombination davon abgetötet.

Mit dem erfindungsgemäßen Verfahren können pathogene Mikroorganismen in der Wasserleitung örtlich begrenzt an den dort vorgesehenen Filtern (d.h. auf einem örtlich begrenzten Raum bzw. in einem lokal begrenzten und im Vergleich zur gesamten Wasserleitung kleinen Volumen) angesammelt und in den Desinfektionsintervallen abgetötet werden. Zum Sammeln von Mikroorganismen enthält dabei jeder Filter zweckmäßig ein Material, bspw. ein Filtermaterial oder ein Adsorbermaterial, welches Mikroorganismen durch Elektroadsorption bindet. Dadurch wird dem in der Wasserleitung geführten Wasser zumindest ein Teil der darin enthaltenen Mikroorganismen entzogen, wodurch zumindest ein ungehindertes Anwachsen der Konzentration von Mikroorganismen in dem Wasser vermieden werden kann.

Zur Beseitigung der in dem oder den Filtern gesammelten Mikroorganismen umfasst jeder Filter zweckmäßig eine Einrichtung zum Abtöten und/oder eine Einrichtung zum Austragen der in dem Filter angesammelten Mikroorganismen. Durch die Einrichtung zum Abtöten der Mikroorganismen können die in dem Filter gesammelten Mikroorganismen in den vorgegebenen Desinfektionsintervallen abgetötet und damit unschädlich gemacht werden. Mit der Einrichtung zum Austragen der Mikroorganismen oder Bruchstücken davon kann die Standzeit der Filter bis zum Austausch in dem nächsten Regenerationsintervall verlängert werden. Die Einrichtung zum Austragen der Mikroorganismen kann auch in den vorgegebenen Regenerationsintervallen genutzt werden, um den Filter durch Austragen der darin gesammelten und abgetöteten Mikroorganismen zu regenerieren, so dass der Filter (in nachfolgenden Filtrationszyklen) wieder zur Aufnahme weiterer Mikroorganismen verfügbar ist. Die Einrichtung zum Austragen der in dem Filter angesammelten Mikroorganismen ist bspw. als Spülvorrichtung ausgebildet, mit der eine Spülflüssigkeit durch den Filter geleitet wird, um die (abgetöteten) Mikroorganismen oder extrazellulären Substanzen vom Filtermaterial zu lösen und mit der durchströmenden Spülflüssigkeit aus dem Filter abzuführen.

Die Einrichtung zum Abtöten der Mikroorganismen ist zweckmäßig in jedem Filter vorgesehen und enthält bspw. eine Heizeinrichtung zum Erhitzen des Filters bzw. des Filtermaterials, oder eine Chemikalienzufuhr, über welche dem Filter ein Desinfektionsmittel, zuführbar ist, welches die in dem Filtermaterial gesammelten Mikroorganismen abtötet. Zum Abtöten der Mikroorganismen in den Filtern können jedoch auch andere Verfahren eingesetzt werden, wie z.B. die Bestrahlung mit UV-Licht, elektrolytisches Erzeugen eines Desinfektionsmittels in dem Filter oder über mikrobiozide Kontaktwirkung mit einem in dem Filter angeordneten silberhaltigen Material, wie z.B. einem silberhaltigen Abstandsgewirke.

Der sich durch die Erfindung im Vergleich zu den bekannten Verfahren ergebende Vorteil liegt darin, dass durch das Ansammeln der Mikroorganismen in den örtlich begrenzten und im Vergleich zu der gesamten Wasserleitung sehr viel kleineren Filtern der (örtliche) Bereich der Wasserleitung, in dem Maßnahmen zur Verminderung eines ungehinderten Wachstum pathogener Mikroorganismen getroffen werden, sehr viel kleiner ist als bei den bekannten Wasserleitungen, in denen z.B. das gesamte in einer Zirkulationsleitung umgewälzte Brauchwasser auf Temperaturen von wenigstens 55°C gehalten werden muss, um eine ungehinderte Legionellenvermehrung zu verhindern. Mit dem erfindungsgemäßen Verfahren kann deshalb bspw. die Temperatur des in einer Zirkulationsleitung umgewälzten Brauchwassers auf wesentlich niedrigeren Temperaturen, beispielsweise im Bereich von 40°C bis 45°C, gehalten werden. Diese Temperaturen des Brauchwassers reichen in der Regel für die gewöhnlichen Verwendungen von Warmwasser im Haushalt, beispielsweise zum Baden oder Duschen, völlig aus. Die Reduzierung der Temperatur des in der Wasserleitung, insbesondere einer Warmwasser-Zirkulationsleitung, umgewälzten Brauchwassers spart dabei zum einen Energie und ermöglicht zum anderen eine effizientere Erzeugung von Warmwasser, welches über regenerative Energiequellen erwärmt wird. Mit dem erfindungsgemäßen Verfahren wird ferner eine zuverlässige und regelmäßige Desinfektion der Filter in den vorgegebenen Desinfektionsintervallen und eine davon entkoppelte Regeneration der Filter in den vorgegebenen Regenerationsintervallen ermöglicht. Dies stellt eine lang anhaltende Funktion der verwendeten Filter sicher.

Bei den Filtern kann es sich beispielsweise um Mikrofilter handeln, welche im Vergleich zu Ultrafiltrations-Filtern einen wesentlich niedrigeren Strömungswiderstand in der Wasserleitung erzeugen.

Alternativ zu Mikrofiltern kann der oder die Filter ein Filter-, Sorptions- oder Adhäsionsmaterial enthalten, welches geeignet ist, Mikroorganismen zu binden. Das Filter-, Sorptions- oder Adhäsionsmaterial ist dabei bevorzugt zur Regenerierung der Filter austauschbar in dem Filter angeordnet.

Die Anlagerung der Mikroorganismen am elektroaktiven Filtermaterial erfolgt dabei durch Elektroadsorption, welche aufgrund der elektroaktiven Eigenschaften des elektroaktiven Materials, insbesondere dessen elektrokinetischem Potenzial (Zeta-Potenzial) ermöglicht wird. Hierfür enthält das elektroaktive Material, welches die Kanäle des Filters zumindest teilweise begrenzt, Substanzen mit einem elektrokinetischen Potenzial in wässriger Umgebung. Beispielsweise enthält das elektroaktive Material ein Metalloxid, insbesondere Aluminiumoxid und/oder Aluminiumhydroxid (Al(OH)₃) und/oder Böhmit (eine Modifikation von Aluminiumhydroxid mit der chemischen Zusammensetzung AlO(OH)) und/oder Zirkonoxid. Es ist bekannt, dass diese Materialien in wässriger Umgebung, und insbesondere im pH-Bereich von 3 - 8, ein elektrokinetisches Potenzial besitzen und dadurch in der Lage sind, negativ geladene Teilchen und Partikel durch Elektroadsorption zu binden. Dadurch können die aufgrund ihrer Zellwandstruktur in der Regel negativ geladenen Mikroorganismen im Wasser an dem elektroaktiven Material des erfindungsgemäßen Filters adsorbiert werden. Es hat sich in überraschender Weise gezeigt, dass es zur Elektroadsorption von Mikroorganismen ausreicht, das mit Mikroorganismen belastete Wasser durch die Kanäle eines solchen Filters zu leiten, ohne dass das Wasser die Kanalwandungen durchströmt.

Als besonders zweckmäßig hat es sich erwiesen, das elektroaktive Material als elektropositiven Textil-Verbundstoff auszubilden, der insbesondere ein Gemisch von Mikro- oder Nanoteilchen oder Fasern eines Metalloxids, wie z.B. Aluminiumoxid, Aluminiumhydroxid oder Böhmit, sowie ein faseriges Trägermaterial, beispielsweise aus Polymer-, Carbon- oder Glasfasern, enthält oder vollständig aus einem solchen Gemisch besteht. Besonders zweckmäßig ist dabei ein Gemisch aus Aluminiumoxid- oder Aluminiumhydroxid- oder Böhmit-Fasern mit einem Faserdurchmesser im Bereich von wenigen Nanometern bis zu 10 µm und einem faserigen Trägermaterial, bspw. ein Faservlies aus Carbon- oder Glasfasern. Als besonders geeignet haben sich dabei aluminiumhaltige Fasern mit einem Durchmesser im Nanometerbereich und insbesondere im Bereich von 2 bis 100 nm und einem Verhältnis von Länge zu Durchmesser von mehr als 5 erwiesen.

Der Wickelfilter setzt sich dabei bevorzugt aus aufgewickelten und dadurch übereinander liegenden Lagen eines flächigen und elektroaktiven Papier- oder Textilmaterials zusammen, welche durch Abstandshalter voneinander getrennt sind. Zwischen benachbarten Lagen des Wickelfilters sind die Abstandshalter angeordnet und erstrecken sich dabei in Längsrichtung des Filters. Dadurch werden zwischen benachbarten Lagen des Wickelfilters und den Abstandshaltern Kanäle ausgebildet, die sich in Längsrichtung des Filters erstrecken und zumindest im Wesentlichen parallel zueinander verlaufen. Bei den Abstandshaltern kann es sich um längliche, beispielsweise stabförmige Abstandshalter handeln, die in Längsrichtung des Filters angeordnet sind. Bevorzugt weisen die Abstandshalter eine wellenförmige oder eine zick-zack-förmige Struktur auf, ähnlich der Struktur einer Wellpappe. Besonders zweckmäßig ist es, die Abstandshalter ebenso wie die Lagen des Wickelfilters aus dem elektroaktiven Material zu fertigen. Dadurch wird gewährleistet, dass die Kanäle des Filters allseitig von Kanalwänden begrenzt werden, die durch ein in wässriger Umgebung elektroaktives Material (d.h. durch ein Material mit einem elektrokinetischen Zeta-Potenzial), begrenzt werden. Auf diese Weise wird eine große effektive und aktive Filterfläche bereitgestellt. Der Wickelfilter wirkt dabei als Tiefenfilter, d.h. die Abscheidung der Teilchen (Mikroorganismen) erfolgt durch Elektroadsorption am elektroaktiven Filtermaterial im Innern des Filtermediums.

Diese und weitere Vorteile ergeben sich aus dem nachfolgend unter Bezugnahme auf die begleitenden Zeichnungen näher beschriebenen Ausführungsbeispielen. Die Zeichnungen zeigen:
- **Fig. 1**:: Schematische Darstellung eines ersten Ausführungsbeispiels einer Wasserversorgungseinrichtung, in welchem das erfindungsgemäße Verfahren ausgeführt werden kann;
- **Fig. 2**:: Schematische Darstellung eines weiteren Ausführungsbeispiels einer Wasserversorgungseinrichtung, in welchem das erfindungsgemäße Verfahren ausgeführt werden kann;
- **Fig. 3**:: Schematische Darstellung eines weiteren Ausführungsbeispiels einer Wasserversorgungseinrichtung, in welchem das erfindungsgemäße Verfahren ausgeführt werden kann;
- **Fig. 4**:: Schematische Darstellung eines weiteren Ausführungsbeispiels einer Wasserversorgungseinrichtung, in welchem das erfindungsgemäße Verfahren ausgeführt werden kann;

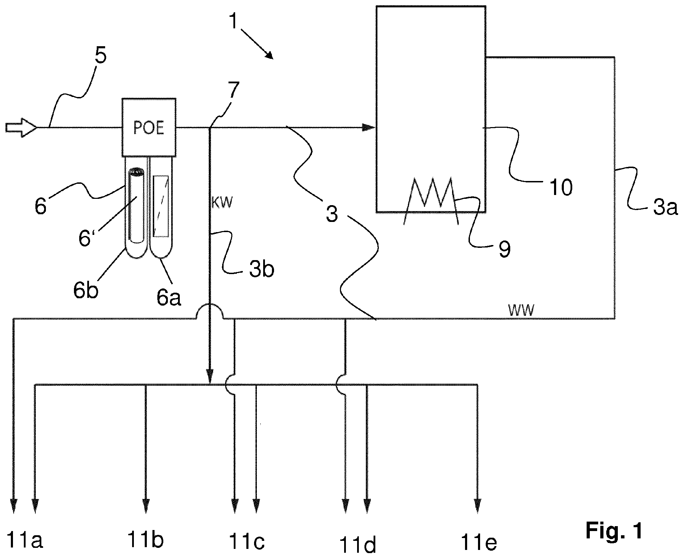

In Fig. 1 ist ein erstes Ausführungsbeispiel einer Wasserversorgungseinrichtung 1 gezeigt, welche gemäß dem erfindungsgemäßen Verfahren filtriert werden kann. Die in Figur 1 gezeigte Wasserversorgungseinrichtung 1 umfasst einen Wasserzulauf 5 (point of entry, POE), bei dem es sich beispielsweise um einen Trinkwasser-Hausanschluss handelt, der mit dem öffentlichen Trinkwasserversorgungssystem in Verbindung steht. Der Wasserzulauf 5 ist stromabwärts mit einer Wasserleitung 3 verbunden. Die Wasserleitung 3 umfasst dabei beispielsweise Rohrleitungen, die in einem Gebäude verlegt sind. Die Wasserleitung 3 des in Figur 1 gezeigten Ausführungsbeispiels umfasst dabei einen Warmwasserzweig 3a und einen Kaltwasserzweig 3b, welche an einer Verzweigungsstelle 7 (T-Verzweigung) mit dem Wasserzulauf 5 verbunden sind. Im Bereich des Wasserzulaufs 5 und insbesondere stromaufwärts der Verzweigungsstelle 7 ist ein Eingangsfilter 6 angeordnet. Dieser ist als Doppelfilter mit einem ersten Filterelement 6a und einem zweiten Filterelement 6b ausgebildet, welche wechselseitig betrieben und regeneriert werden können. Die Wasserleitung 3 wird von dem Wasserzulauf mit Trink- oder Betriebswasser versorgt, wobei das Wasser unter Druck vom Wasserzulauf 5 in Pfeilrichtung in die Wasserleitung 3 eingespeist wird.

Die Wasserleitung 3 enthält eine Mehrzahl von Entnahmestellen 11a, 11b, 11c, 11d, 11e, welche entweder mit Kaltwasser (KW) aus dem Kaltwasserzweig 3b und/oder mit Warmwasser (WW) aus dem Warmwasserzweig 3a versorgt werden. Bei den Entnahmestellen 11 handelt es sich beispielsweise um Zapfeinrichtungen wie Wasserhähne oder Duschköpfe. Es kann sich dabei auch um Wasseranschlüsse für Haushaltsgeräte wie Wasch- oder Spülmaschinen handeln. Im Warmwasserzweig 3a ist ein Speicherbehälter 10 angeordnet, der eine Heizreinrichtung 9 enthält oder mit einer solchen Heizeinrichtung 9 gekoppelt ist. Die Heizeinrichtung 9 dient dabei zum Erwärmen des vom Wasserzulauf 5 kommenden (kalten) Trink- oder Betriebswasser. Das von der Heizeinrichtung 9 erwärmte Wasser wird in den Speicherbehälter 10 eingeleitet und dort zur Entnahme durch die Entnahmestellen 11 bevorratet.

Wenigstens eines der beiden Filterelemente 6a, 6b des Eingangsfilters 6 enthält ein Filtermaterial, welches in der Lage ist Mikroorganismen durch Sorption (Adsorption oder Absorption) oder durch Adhäsion an dem Filtermaterial zu binden. Bevor das vom Wasserzulauf 5 kommende Wasser in die Wasserleitung 3 eingespeist wird, durchläuft das Wasser den Eingangsfilter 6. Dabei werden die in dem Wasser enthaltene Mikroorganismen in einem der beiden Filterelemente 6a, 6b des Eingangsfilters 6 gebunden und dort angesammelt. Dadurch wird gewährleistet, dass kein mit Mikroorganismen belastetes Wasser in die Wasserleitung 3 eingespeist wird.

Die Filterelemente 6a, 6b des Eingangsfilters 6 werden zur Desinfektion des Filtermaterials in vorgegebenen Desinfektions-Intervallen desinfiziert, wobei die in dem Filtermaterial des jeweiligen Filterelements 6a, 6b gesammelten Mikroorganismen abgetötet werden. Dafür weist der Eingangsfilter 6 bevorzugt eine Einrichtung zum Abtöten von in dem Filter gesammelten Mikroorganismen auf. Bei dieser Einrichtung zum Abtöten von Mikroorganismen kann es sich beispielsweise um eine Heizeinrichtung handeln, mit der das Filtermaterial eines Filterelements 6a, 6b des Eingangsfilters 6 auf Temperaturen von zweckmäßig mehr als 70°C erhitzt werden kann. Durch das Erhitzen des Filtermaterials werden die daran angelagerten Mikroorganismen abgetötet. Alternativ hierzu kann die Einrichtung zum Abtöten von Mikroorganismen auch eine Spüleinrichtung aufweisen, mit der eine desinfizierende Spülflüssigkeit (Desinfektionsmittel) in das Filtermaterial eingeleitet wird, um die darin angesammelten Mikroorganismen abzutöten. Der Eingangsfilter weist dazu eine Zufuhrleitung auf, durch welche das Desinfektionsmittel in den Filter und durch das Filtermaterial geleitet und über eine Ablaufleitung wieder aus dem Filter abgeführt werden kann.

Zweckmäßig erfolgt das Desinfizieren des Eingangsfilters 6 zyklisch und insbesondere periodisch in vorgegebenen Desinfektions-Intervallen. Je nach Ausbildung und Größe des Eingangsfilters 6 und der Wasserleitung 3 haben sich dabei Desinfektions-Intervalle von 8 bis 48 Stunden und insbesondere von zwischen 16 und 36 Stunden als geeignet erwiesen.

Die Ausbildung des Eingangsfilters 6 als Doppelfilter mit einem ersten Filterelement 6a und einem zweiten Filterelement 6b ermöglicht es dabei, immer eines der beiden Filterelemente 6a oder 6b im Filtrationsbetrieb zu halten, während das andere Filterelement desinfiziert oder regeneriert werden kann. Dabei ist es auch möglich, in Strömungsrichtung vor oder nach den beiden Filterelementen 6a, 6b noch weitere Filterelemente anzuordnen, beispielsweise einen Partikelfilter.

Die Filterelemente 6a, 6b des Eingangsfilters 6 werden regelmäßig und in vorgegebenen Regenerationsintervallen regeneriert. Dies kann entweder durch Austragen des im jeweiligen Filterelement 6a, 6b angesammelten und dort in den Desinfektions-Intervallen abgetöteten Mikroorganismen aus dem Filterelement oder durch Austausch des gesamten Eingangsfilters 6 gegen einen Ersatzfilter oder auch durch Austausch des Filtermaterials der Filterelemente 6a bzw. 6b erfolgen. Zweckmäßig enthält jedes Filterelement 6a, 6b ein austauschbares Filtermaterial, wie z.B. ein Filtervlies oder einen oben bereits beschriebenen Wickelfilter. Dies ermöglicht zum Regenerieren des jeweiligen Filterelements 6a, 6b einen einfachen und schnellen Austausch des Filtermaterials. Alternativ zum Austausch des Filtermaterials oder zum Ersatz des gesamten Eingangsfilters 6 gegen einen Ersatzfilter können die Filterelemente 6a, 6b des Eingangsfilters 6 auch durch Austragen der in dem jeweiligen Filterelement angesammelten Mikroorganismen regeneriert werden. Hierfür ist in dem Eingangsfilter 6 eine Einrichtung zum Spülen der Filterelemente 6a, 6b mit einer Spülflüssigkeit vorgesehen. Über diese Spüleinrichtung können die Filterelemente 6a, 6b des Eingangsfilters 6 mit einer Spülflüssigkeit gespült werden, um die im Filtermaterial angesammelten Mikroorganismen aus dem jeweiligen Filterelement 6a, 6b auszutragen. Zweckmäßig enthält die Spülflüssigkeit ein Tensid, welches dazu beiträgt, dass am Filtermaterial gebundene (und abgetötete) Mikroorganismen vom Filtermaterial abgelöst und mit der Spülflüssigkeit aus dem Eingangsfilter 6 herausgespült werden können.

Bevorzugt wird auch in jedem Desinfektions-Intervall nach dem Abtöten der im jeweiligen Filterelement 6a, 6b angesammelten Mikroorganismen das Filterelement durch Durchleiten einer Spülflüssigkeit, beispielsweise Wasser, gespült. Durch diese Spülung in jedem Desinfektions-Intervall können die im jeweiligen Desinfektions-Intervall in dem Filter abgetöteten Mikroorganismen zumindest zum Teil aus dem Filter ausgetragen werden. Dadurch wird der mit abgetöteten Mikroorganismen beladene Filter zumindest zum Teil wieder entladen, so dass er in den nachfolgenden Filterzyklen zum Ansammeln von Mikroorganismen zur Verfügung steht.

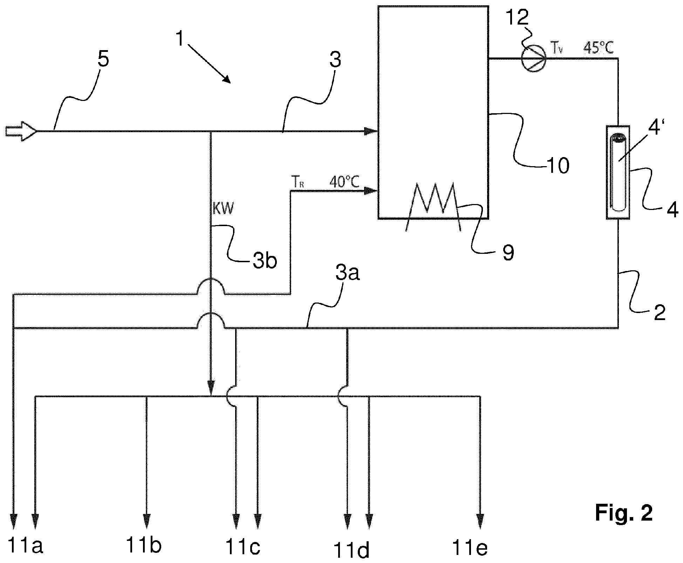

In Figur 2 ist eine weitere Ausführungsform einer Wasserversorgungseinrichtung gezeigt, welche mit dem erfindungsgemäßen Verfahren filtriert werden kann. In diesem Ausführungsbeispiel ist der Warmwasserzweig 3a der Wasserleitung 3 als Zirkulationsleitung 2 ausgebildet. In der Zirkulationsleitung 2 ist ein Speicherbehälter 10 angeordnet, welcher eine Heizeinrichtung 9 enthält. Dem Speicherbehälter 10 wird vom Wasserzulauf 5 Kaltwasser zugeleitet, welches von der Heizeinrichtung 9 auf eine Vorlauftemperatur T_{V} erhitzt wird. Zweckmäßig liegt die Vorlauftemperatur dabei im Bereich von 40°C bis 50°C und besonders bevorzugt bei 45°C. In der Zirkulationsleitung 2 ist ferner eine Zirkulationspumpe 12 angeordnet, welche das erwärmte Wasser aus dem Speicherbehälter 10 in die Zirkulationsleitung 2 pumpt, wo es zirkuliert und schließlich in den Speicherbehälter zurück geleitet wird. Das in der Zirkulationsleitung 2 zirkulierende Wasser wird dabei unter einer Rücklauftemperatur T_{R} in den Speicherbehälter 10 zurückgeführt, wobei die Rücklauftemperatur niedriger ist als die Vorlauftemperatur und beispielsweise bei ca. 40°C liegt.

Um ein ungehindertes Wachstum von Mikroorganismen in der Zirkulationsleitung 2 zu verhindern, ist diese mit einem Zirkulationsfilter 4 ausgestattet. Das in der Zirkulationsleitung 2 zirkulierende Warmwasser wird durch den Zirkulationsfilter 4 geleitet, wodurch in dem Warmwasser enthaltene Mikroorganismen am Filtermaterial des Zirkulationsfilters 4 angelagert werden. Der Zirkulationsfilter 4 wird - wie im Ausführungsbeispiel der Figur 1 beim Eingangsfilter 6 beschrieben - in vorgegebenen Desinfektions-Intervallen regelmäßig desinfiziert, indem die im Zirkulationsfilter 4 angesammelten Mikroorganismen abgetötet und ggf. anschließend durch Spülen des Filters aus diesem ausgetragen werden. Weiterhin wird der Zirkulationsfilter 4 in vorgegebenen Regenerations-Intervallen regeneriert, indem er gegen einen Ersatzfilter ausgetauscht oder indem das Filtermaterial des Zirkulationsfilters 4 gewechselt wird. Alternativ dazu kann der Zirkulationsfilter 4 auch durch Austragen der dort im Filtermaterial angesammelten und abgetöteten Mikroorganismen aus dem Filter regeneriert werden. Die Regenerations-Intervalle sind dabei länger als die Desinfektions-Intervalle, insbesondere um einen Faktor zwischen 10 und 500. Als bevorzugte Regenerations-Intervalle haben sich Zeiträume und 8 und 18 Monaten und insbesondere zwischen 10 und 14 Monaten erwiesen. Besonders zweckmäßig ist ein RegenerationsIntervall von ca. einem Jahr.

In dem in Figur 2 gezeigten Ausführungsbeispiel ist im Bereich des Wasserzulauf 5 kein Eingangsfilter vorgesehen. Es ist jedoch in Abwandlung dieses zeichnerisch hier dargestellten Ausführungsbeispiels der Figur 2 auch möglich, ergänzend zu dem Zirkulationsfilter 4 auch einen Eingangsfilter 6 vorzusehen, wie bei dem Ausführungsbeispiel von Figur 1. Die Desinfizierung und Regeneration des Eingangsfilters erfolgt dann zweckmäßig in entsprechender Weise wie im Ausführungsbeispiel von Figur 1 beschrieben, wobei es besonders zweckmäßig ist, wenn die Desinfektions-Intervalle und die Regenerations-Intervalle des Eingangsfilters mit denjenigen des Zirkulationsfilters 4 zusammenfallen.

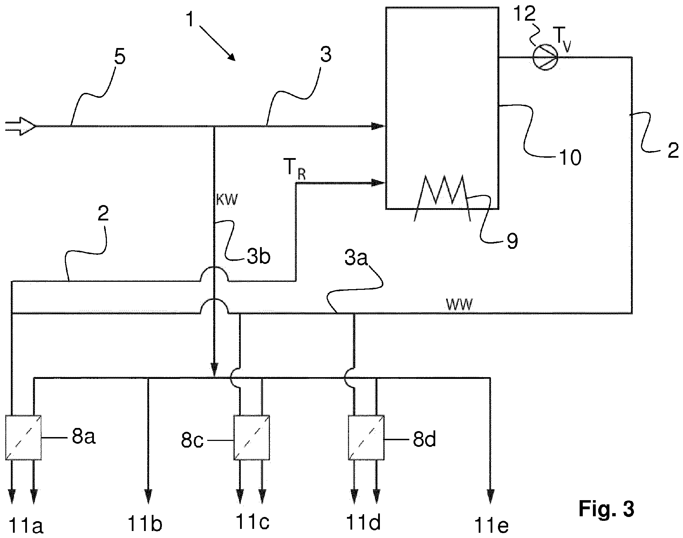

Ein weiteres Ausführungsbeispiel einer Wasserversorgungseinrichtung 1, welche gemäß dem erfindungsgemäßen Verfahren filtriert werden kann, ist in Figur 3 gezeigt. In diesem Ausführungsbeispiel umfasst die Wasserleitung 3 einen Kaltwasserzweig 3b und einen Warmwasserzweig 3a, welcher wiederum wie beim Ausführungsbeispiel von Figur 2 als Zirkulationsleitung 2 ausgebildet ist und einen Speicherbehälter 10 mit einer Heizeinrichtung 9 sowie eine Zirkulationspumpe 12 umfasst. Anders als beim Ausführungsbeispiel von Figur 2 ist in dem Ausführungsbeispiel von Figur 3 in der Zirkulationsleitung 2 kein Zirkulationsfilter vorgesehen. Stattdessen sind zumindest die Entnahmestellen 11a, 11c, 11d, welche mit Warmwasser aus dem Warmwasserzweig 3a (Zirkulationsleitung 2) der Wasserleitung 3 beaufschlagt werden, mit einem Entnahmestellenfilter 8a, 8c, 8d ausgestattet. Hierfür ist beispielsweise vorgesehen, dass eine Entnahmestelle in Form eines Wasserhahns oder eines Duschkopfs einen Entnahmestellenfilter 8a, 8c bzw. 8d enthält, durch den das durch die Entnahmestelle 11a, 11c, 11d strömende Wasser geleitet wird, bevor es die jeweilige Entnahmestelle verlässt. Dadurch werden Mikroorganismen, die in dem Wasser enthalten sind, welches der jeweiligen Entnahmestelle 11 zugeführt wird, in dem jeweiligen Entnahmestellenfilter 8 gebunden, wodurch verhindert wird, dass aus der Entnahmestelle 11 mit Mikroorganismen belastetes Wasser ausströmen kann.

Wie in den Ausführungsbeispielen der Figuren 1 und 2 sind auch die Entnahmestellenfilter 8 mit einem Filtermaterial ausgestattet, welches Mikroorganismen durch Sorption oder Adhäsion binden kann. Die Entnahmestellenfilter 8 werden gemäß der Erfindung regelmäßig und in vorgegebenen Desinfektions-Intervallen desinfiziert, indem die im Filtermaterial des jeweiligen Entnahmestellenfilters 8 gesammelten Mikroorganismen abgetötet werden. Hierfür weist jeder Entnahmestellenfilter 8 eine Einrichtung zum Abtöten von Mikroorganismen auf. Besonders geeignet ist hierfür eine Heizeinrichtung, die beispielsweise an einem Wasserhahn oder einem Duschkopf angeordnet ist und elektrisch betrieben wird, um das Filtermaterial des jeweiligen Entnahmestellenfilters 8 auf Temperaturen von bevorzugt mehr als 70°C aufzuheizen. Durch das Erhitzen des Filtermaterials des jeweiligen Entnahmestellenfilters 8 werden die darin gesammelten Mikroorganismen in den Desinfektions-Intervallen regelmäßig abgetötet. Wie beim Eingangsfilter 6 und wie beim Zirkulationsfilter 4 werden auch die Entnahmestellenfilter 8 regelmäßig und in vorgegebenen Regenerations-Intervallen regeneriert, indem beispielsweise der Entnahmestellenfilter 8 oder dessen Filtermaterial gegen einen Ersatzfilter bzw. ein Ersatzfiltermaterial ausgetauscht wird. Auch bei den Entnahmestellenfiltern 8 ist alternativ hierzu eine Regeneration der Filter durch Durchleiten einer Spülflüssigkeit möglich, welche die angelagerten und abgetöteten Mikroorganismen vom Filtermaterial des jeweiligen Entnahmestellenfilters 8 ablöst und aus dem Entnahmestellenfilter 8 ausspült.

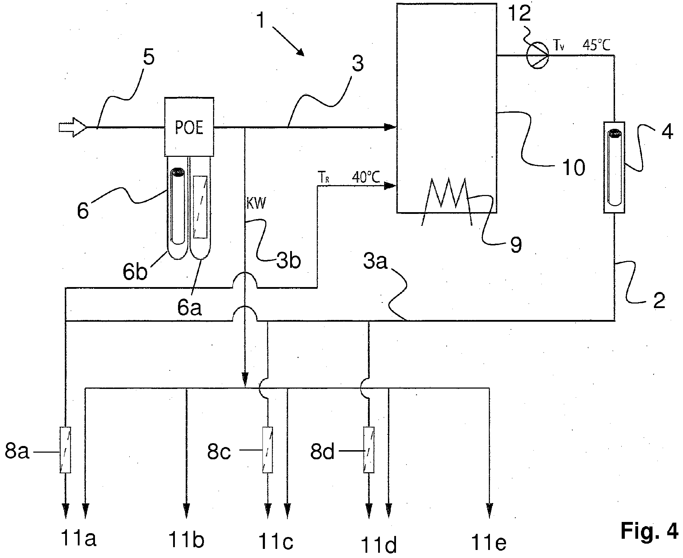

In dem in Figur 4 gezeigten Ausführungsbeispiel ist die Wasserversorgungseinrichtung 1 sowohl mit einem Eingangsfilter 6 (gemäß dem Ausführungsbeispiel von Figur 1), mit einem Zirkulationsfilter 4 (gemäß dem Ausführungsbeispiel von Figur 2) und mit Entnahmestellenfiltern 8 (gemäß dem Ausführungsbeispiel von Figur 3) ausgestattet. Wie aus Figur 4 ersichtlich, sind dabei nur die Bereiche der Entnahmestellen 11a, 11c, 11d mit einem Entnahmestellenfilter 8a, 8c bzw. 8d versehen, welche mit Warmwasser (WW) aus dem Warmwasserzweig 3a (Zirkulationsleitung 2) der Wasserleitung 3 versorgt werden. Dies gewährleistet, dass jedenfalls die in der Zirkulationsleitung 2 in Strömungsrichtung nach dem Zirkulationsfilter 4 neu entstandenen Mikroorganismen noch im jeweiligen Entnahmestellenfilter 8 abgetötet werden, bevor Sie die Wasserleitung 3 durch die jeweilige Entnahmestelle 11 verlassen. Ein Anwachsen von Mikroorganismen im Kaltwasserzweig 3b der Wasserleitung 3 ist aufgrund der dort niedrigeren Wassertemperaturen in der Regel nicht zu befürchten, weshalb es dort ausreichend ist, allein durch den Eingangsfilter 6 zu gewährleisten, dass zumindest weitgehend unbelastetes Wasser in den Kaltwasserzweig 3b einströmt.

## Patentansprüche

1. Verfahren zur Filtration von Trink- oder Betriebswasser in einer Wasserversorgungseinrichtung (1) mit einem Wasserzulauf (5), einer mit dem Wasserzulauf (5) in Verbindung stehenden Wasserleitung (3) und wenigstens einem in der Wasserleitung (3) angeordneten Wasserfilter (4, 6, 8), der mit dem zu filtrierenden Wasser beaufschlagt wird, wobei in dem Wasser enthaltene Mikroorganismen in dem wenigstens einen Wasserfilter (4, 6, 8) gebunden und in dem Wasserfilter (4, 6, 8) angesammelt werden und die in dem jeweiligen Wasserfilter (4, 6, 8) angesammelten Mikroorganismen regelmäßig in vorgegebenen Desinfektionsintervallen abgetötet und wenigstens ein Teil der abgetöteten Mikroorganismen in den Desinfektionsintervallen nach dem Abtöten durch Durchleiten einer Spülflüssigkeit durch den Wasserfilter (4, 6, 8) aus dem Wasserfilter (4, 6, 8) ausgetragen werden, **dadurch gekennzeichnet, dass** der wenigsten eine Wasserfilter (4, 6, 8) ein Wickelfilter ist, der aus einem zylindrisch aufgewickelten flächigen Filtermaterial gebildet ist und eine Mehrzahl von zumindest im Wesentlichen parallel zueinander und in einer Längsrichtung des Filters verlaufende Kanäle mit einem Kanaleingang und einem Kanalausgang aufweist, wobei die Kanäle zumindest teilweise von einem elektroaktiven Material begrenzt werden und das zu filtrierende Wasser die Kanäle jeweils vom Kanaleingang zum Kanalausgang durchströmt, ohne das elektroaktive Material zu durchströmen und wobei die Mikroorganismen, welche in dem durch die Wasserleitung (3) geleiteten Wasser enthalten sind, in dem Wasserfilter (4, 6, 8) durch Elektroadsorption gebunden werden und der mit abgetöteten Mikroorganismen oder anderen Partikeln beladene Wasserfilter (4, 6, 8) in vorgegebenen Regenerationsintervallen durch Austausch des Wasserfilters (4, 6, 8) gegen einen Ersatzfilter oder durch Austausch eines Filtermaterials des Wasserfilters (4, 6, 8) regeneriert wird, wobei die Desinfektionsintervalle zwischen 8 und 48 Stunden liegen und die Regenerationsintervalle um einen Faktor zwischen 10 und 500 länger als die Desinfektionsintervalle sind.

2. Verfahren nach Anspruch 1, wobei die Wasserversorgungseinrichtung (1) einen im Wasserzulauf (5) angeordneten Eingangsfilter (6) aufweist.

3. Verfahren nach Anspruch 1 oder 2, **dadurch gekennzeichnet, dass** die Wasserleitung (3) eine Zirkulationsleitung (2) umfasst, welche mit einem Zirkulationsfilter (4) gekoppelt ist.

4. Verfahren nach einem der voranstehenden Ansprüche, **dadurch gekennzeichnet, dass** die Wasserleitung (3) Entnahmestellen (11a, 11c, 11d) mit Entnahmestellenfilter (8a, 8c, 8d) aufweist, wobei die Wasserfilter (4, 6, 8) die Entnahmestellenfilter (8a, 8c, 8d) umfassen.

5. Verfahren nach einem der voranstehenden Ansprüche, **dadurch gekennzeichnet, dass** die in dem oder jedem Filter (4, 6, 8) gesammelten Mikroorganismen periodisch in den vorgegebenen Desinfektionsintervallen abgetötet werden.

6. Verfahren nach Anspruch 5, **dadurch gekennzeichnet, dass** die Belastung des Wassers mit Mikroorganismen mit einer Messeinrichtung erfasst wird und dass die Desinfektionsintervalle und die Wiederholungsrate der Desinfektions-Zyklen so ausgewählt und an die erfassten Belastungskonzentrationen angepasst werden, dass über einen Zeitraum mehrerer solcher Desinfektions-Zyklen mehr Mikroorganismen abgetötet werden als im selben Zeitraum in der Wasserversorgungseinrichtung (1) entstehen.

7. Verfahren nach einem der voranstehenden Ansprüche, **dadurch gekennzeichnet, dass** die Desinfektionsintervalle zwischen 16 und 36 Stunden liegen.

8. Verfahren nach einem der voranstehenden Ansprüche, **dadurch gekennzeichnet, dass** die Regenerationsintervalle zwischen 8 und 18 Monaten und insbesondere zwischen 10 und 14 Monaten liegen.

9. Verfahren nach einem der voranstehenden Ansprüche, **dadurch gekennzeichnet, dass** die in dem jeweiligen Filter (4, 6, 8) gesammelten Mikroorganismen in den Desinfektionsintervallen thermisch durch Erhitzen des Filters (4, 6, 8), chemisch durch Einleiten eines Desinfektionsmittels in den Filter (4, 6, 8), physikalisch durch Bestrahlung mit UV-Licht, elektrochemisch durch elektrolytisches Erzeugen eines Desinfektionsmittels in dem Filter (4, 6, 8) oder einer Kombination davon abgetötet werden.

10. Verfahren nach einem der voranstehenden Ansprüche, **dadurch gekennzeichnet, dass** der wenigstens eine Wasserfilter (4, 6, 8) ein austauschbares Filtermaterial enthält, welches Mikroorganismen bindet, wobei das Filtermaterial zur Regenerierung des Filters in den Regenerationsintervallen gegen unbeladenes Filtermaterial ausgetauscht wird.

11. Verfahren nach Anspruch 2 oder einem der Ansprüche 3 bis 9, soweit auf Anspruch 2 rückbezogen, **dadurch gekennzeichnet, dass** es sich bei dem Eingangsfilter (6) um einen Doppelfilter mit einem ersten Filterelement (6a) und einem zweiten Filterelement (6b) handelt, wobei die beiden Filterelemente (6a, 6b) wechselseitig betrieben und regeneriert werden.

12. Verfahren nach einem der voranstehenden Ansprüche, wobei in der Wasserleitung (3) und insbesondere in der Zirkulationsleitung (2) ein Speicherbehälter (10) angeordnet ist, der mit dem Wasserzulauf (5) in Verbindung steht.

## Claims

1. A method for filtering drinking water or service water in a water supply device (1) comprising a water inlet (5), a water pipe (3) connected to the water inlet (5), and at least one water filter (4, 6, 8) arranged in the water pipe (3), which is fed with the water to be filtered, whereby microorganisms contained in the water are trapped in the at least one water filter (4, 6, 8) and are accumulated in the water filter (4, 6, 8), and the microorganisms accumulated in the respective water filter (4, 6, 8) are regularly deactivated at predetermined disinfection intervals, and following to their deactivation, at least a portion of the deactivated microorganisms is discharged from the water filter (4, 6, 8) during the disinfection intervals**, characterised in that** the at least one water filter (4, 6, 8) is a wound filter formed from a flat filter material wound into a cylindrical shape and comprising a plurality of channels, each channel having a channel inlet and a channel outlet and is extending at least substantially parallel to one another and in a longitudinal direction of the filter, wherein the channels are at least partially bounded by an electroactive material and the water to be filtered flows through the channels from the channel inlet to the channel outlet without passing through the electroactive material, and wherein the microorganisms contained in the water conveyed through the water pipe (3) are bound in the water filter (4, 6, 8) and the water filter (4, 6, 8), which is loaded with deactivated microorganisms or other particles, is regenerated at predetermined regeneration intervals by replacing the water filter (4, 6, 8) with a replacement filter or by replacing a filter material of the water filter (4, 6, 8), whereby the disinfection intervals are between 8 and 48 hours and the regeneration intervals are a factor of between 10 and 500 longer than the disinfection intervals.

2. The method according to claim 1, wherein the water supply device (1) comprises an inlet filter (6) arranged in the water inlet (5).

3. The method according to claim 1 or 2, **characterised in that** the water pipe (3) comprises a circulation pipe (2) which is coupled to a circulation filter (4).

4. The method according to any one of the preceding claims, **characterised in that** the water pipe (3) comprises tapping points (11a, 11c, 11d) with tapping point filters (8a, 8c, 8d), wherein the water filters (4, 6, 8) comprise the tapping point filters (8a, 8c, 8d).

5. The method according to any one of the preceding claims, **characterised in that** the microorganisms collected in the one or each filter (4, 6, 8) are periodically deactivated at the specified disinfection intervals.

6. The method according to claim 5, **characterised in that** the concentration of microorganisms in the water is detected by a measuring device, and **in that** the disinfection intervals and the repetition rate of the disinfection cycles are selected and adapted to the detected concentration in such a way that, over a period spanning several such disinfection cycles, more microorganisms are deactivated than arising within the same period in the water supply system (1).

7. The method according to any one of the preceding claims, **characterised in that** the disinfection intervals are between 16 and 36 hours.

8. The method according to any one of the preceding claims, **characterised in that** the regeneration intervals are between 8 and 18 months and, in particular, between 10 and 14 months.

9. The method according to any one of the preceding claims, **characterised in that** the microorganisms collected in the respective filter (4, 6, 8) are deactivated during the disinfection intervals thermally by heating the filter (4, 6, 8), chemically by introducing a disinfectant into the filter (4, 6, 8), physically by irradiation with UV light, electrochemically by electrolytically generating a disinfectant within the filter (4, 6, 8), or by a combination thereof.

10. The method according to any one of the preceding claims, **characterised in that** the at least one water filter (4, 6, 8) contains a replaceable filter material which binds microorganisms, wherein the filter material is replaced with uncontaminated filter material during the regeneration intervals in order to regenerate the filter.

11. The method according to claim 2 or any one of claims 3 to 9, insofar as they refer back to claim 2, **characterised in that** the inlet filter (6) is a dual filter comprising a first filter element (6a) and a second filter element (6b), wherein the two filter elements (6a, 6b) are operated and regenerated alternately.

12. The method according to any one of the preceding claims, wherein a storage tank (10) is arranged in the water pipe (3) and, in particular, in the circulation pipe (2), which storage tank is connected to the water inlet (5).

## Revendications

1. Procédé de filtration d'eau potable ou de traitement dans un dispositif d'alimentation en eau (1) comportant une arrivée d'eau (5), une conduite d'eau (3) en liaison avec l'arrivée d'eau (5) et au moins un filtre à eau (4, 6, 8) agencé dans la conduite d'eau (3), qui est alimenté en eau à filtrer, dans lequel des micro-organismes contenus dans l'eau sont retenus dans l'au moins un filtre à eau (4, 6, 8) et s'accumulent dans le filtre à eau (4, 6, 8), et les micro-organismes accumulés dans le filtre à eau (4, 6, 8) respectif sont régulièrement éliminés à des intervalles de désinfection prédéfinis, et au moins une partie des micro-organismes éliminés au cours des intervalles de désinfection, après leur élimination est évacuée du filtre à eau (4, 6, 8) par passage d'un liquide de rinçage à travers le filtre à eau (4, 6, 8), **caractérisé en ce que** l'au moins un filtre à eau (4, 6, 8) est un filtre enroulé, qui est formé d'un matériau filtrant plat enroulé de manière cylindrique et présente une pluralité de canaux s'étendant au moins essentiellement parallèlement les uns aux autres et dans une direction longitudinale du filtre, comportant une entrée de canal et une sortie de canal, dans lequel les canaux sont délimités au moins en partie par un matériau électroactif et l'eau à filtrer traverse les canaux respectivement depuis l'entrée de canal jusqu'à la sortie de canal sans traverser le matériau électroactif, et dans lequel les micro-organismes, qui sont contenus dans l'eau acheminée par la conduite d'eau (3) sont retenus par électroadsorption dans le filtre à eau (4, 6, 8), et le filtre à eau (4, 6, 8), chargé de micro-organismes éliminés ou d'autres particules, est régénéré à des intervalles de régénération prédéfinis par le remplacement du filtre à eau (4, 6, 8) par un filtre de rechange ou par le remplacement d'un matériau filtrant du filtre à eau (4, 6, 8), dans lequel les intervalles de désinfection sont compris entre 8 et 48 heures et les intervalles de régénération sont plus longs que les intervalles de désinfection d'un facteur compris entre 10 et 500.

2. Procédé selon la revendication 1, dans lequel le dispositif d'alimentation en eau (1) présente un filtre d'entrée (6) agencé dans l'arrivée d'eau (5).

3. Procédé selon la revendication 1 ou 2, **caractérisé en ce que** la conduite d'eau (3) comprend une conduite de circulation (2) qui est raccordée à un filtre de circulation (4).

4. Procédé selon l'une des revendications précédentes,
**caractérisé en ce que** la conduite d'eau (3) présente des points de prélèvement (11a, 11c, 11d) comportant des filtres de point de prélèvement (8a, 8c, 8d), dans lequel les filtres à eau (4, 6, 8) comprennent les filtres de point de prélèvement (8a, 8c, 8d).

5. Procédé selon l'une des revendications précédentes,
**caractérisé en ce que** les micro-organismes accumulés dans le ou chaque filtre (4, 6, 8) sont éliminés périodiquement, au cours des intervalles de désinfection prédéfinis.

6. Procédé selon la revendication 5, **caractérisé en ce que** la charge en micro-organismes de l'eau est détectée à l'aide d'un dispositif de mesure et **en ce que** les intervalles de désinfection et la fréquence de répétition des cycles de désinfection sont choisis et adaptés aux concentrations de charge détectées, de sorte que, sur une période couvrant plusieurs de ces cycles de désinfection, le nombre de micro-organismes éliminés soit supérieur à celui qui se développe au cours de la même période dans le dispositif d'alimentation en eau (1).

7. Procédé selon l'une des revendications précédentes,
**caractérisé en ce que** les intervalles de désinfection sont compris entre 16 et 36 heures.

8. Procédé selon l'une des revendications précédentes,
**caractérisé en ce que** les intervalles de régénération sont compris entre 8 et 18 mois, et notamment entre 10 et 14 mois.

9. Procédé selon l'une des revendications précédentes,
**caractérisé en ce que** les micro-organismes collectés dans le filtre (4, 6, 8) respectif sont éliminés thermiquement pendant les intervalles de désinfection par chauffage du filtre (4, 6, 8), chimiquement par introduction d'un agent désinfectant dans le filtre (4, 6, 8), physiquement par irradiation aux rayons UV, électrochimiquement par production électrolytique d'un agent désinfectant dans le filtre (4, 6, 8) ou par une combinaison de ceux-ci.

10. Procédé selon l'une des revendications précédentes,
**caractérisé en ce que** l'au moins un filtre à eau (4, 6, 8) contient un matériau filtrant remplaçable qui retient les micro-organismes, dans lequel le matériau filtrant est remplacé par du matériau filtrant non chargé lors des intervalles de régénération afin de régénérer le filtre.

11. Procédé selon la revendication 2 ou l'une des revendications 3 à 9, dans la mesure où elles se réfèrent à la revendication 2, **caractérisé en ce que** le filtre d'entrée (6) est un double filtre comportant un premier élément filtrant (6a) et un second élément filtrant (6b), dans lequel les deux éléments filtrants (6a, 6b) sont exploités et régénérés en alternance.

12. Procédé selon l'une des revendications précédentes, dans lequel un réservoir de stockage (10), qui est en liaison avec l'arrivée d'eau (5), est agencé dans la conduite d'eau (3) et notamment dans la conduite de circulation (2).
